# EUROPÄISCHE PATENTSCHRIFT

(11) **EP 1 255 625 B1**
(45) Veröffentlichungstag und Bekanntmachung des Hinweises auf die Patenterteilung: **28.12.2011**
(21) Anmeldenummer: 01969805.9
(22) Anmeldetag: 01.10.2001
(51) Int. Cl.: B23D 63/00, B23Q 7/14

(54) **EINRICHTUNG ZUM BEARBEITEN VON KREISSÄGEBLÄTTERN**
DEVICE FOR MACHINING CIRCULAR SAW BLADES
DISPOSITIF DE TRAITEMENT DE LAMES DE SCIE CIRCULAIRES

(30) Priorität: 13.10.2000 DE 10050803
(43) Veröffentlichungstag der Anmeldung: 13.11.2002
(73) Patentinhaber: VOLLMER WERKE MASCHINENFABRIK GMBH, D-88400 Biberach (DE)
(72) Erfinder: LENARD, Peter, 88400 Biberach (DE); BECK, Ernst, 88400 Biberach (DE)
(74) Vertreter: Goetz, Rupert
(86) Internationale Anmeldenummer: PCT/EP2001/011337
(87) Internationale Veröffentlichungsnummer: WO 2002/030604

(56) Entgegenhaltungen:
- DE-A- 2 618 306
- DE-A- 3 621 415
- DE-A- 19 808 339
- DE-A1- 3 618 996
- DE-C1- 4 434 286
- DE-U1- 29 920 628
- FR-B1- 2 604 150
- GB-A- 2 124 942
- US-A- 2 125 937
- US-A- 2 125 937
- US-A- 2 139 553
- US-A- 2 139 553

## Beschreibung

Die Erfindung betrifft eine Einrichtung zum Bearbeiten hartmetallbestückter Zähne von Sägeblättern, mit mehreren einzelnen Maschinen zum Schleifen von Zahnbrustflächen, Zahnrückenflächen und Zahnflankenflächen, die durch einen Roboter miteinander verkettet sind, um Kreissägeblätter unterschiedlichen Durchmessers und mit unterschiedlichen Verzahnungen vollautomatisch zu bearbeiten. Diese Einrichtung umfasst Plattformen zum Stapeln von Kreissägeblättern, mit einer an der Plattform zentral angeordneten Halterung, an der ein zentraler Dorn zum Zentrieren eines Stapels Sägeblätter aufrecht befestigt ist.

Solche Plattformen, meist in Form von Ladeplattformen von Handkarren, werden üblicherweise verwendet, um Kreissägeblätter zum erstmaligen Schärfen oder zum Nachschärfen ihrer Sägezähne stapelweise bereitzuhalten, damit sie Stück für Stück an eine Bearbeitungseinrichtung übergeben, und nach dem Schärfen ihrer Zähne wiederum auf einer solchen Plattform gestapelt werden (DE 198 08 339 A1).

Das Schärfen von Sägezähnen umfasst üblicherweise mehrere Arbeitsgänge wie das Schleifen von Zahnbrust-, Zahnrücken- und Zahnflankenflächen. Hierfür geeignete Einrichtungen können aus mehreren einzelnen Maschinen bestehen, die durch einen Roboter miteinander verkettet und imstande sind, Kreissägeblätter unterschiedlichen. Durchmessers und mit unterschiedlichen Verzahnungen vollautomatisch zu bearbeiten. Um den mannlosen Betrieb einer solchen Einrichtung während einer längeren Zeitspanne, beispielsweise einer vollen Nachtschicht zu ermöglichen, ist der Arbeitsbereich eines zum Beschicken der Einrichtung mit Kreissägeblättern und zum Entnehmen bearbeiteter Kreissägeblätter vorgesehenen Roboters schon derart ausgedehnt worden, dass er sich auf Standplätze für eine grössere Anzahl von Plattformen mit je einem zentralen Dorn zum Zentrieren je eines Stapels Sägeblätter erstreckt. Damit die Plattformen gegeneinander austauschbar sind und somit in beliebiger Reihenfolge im Arbeitsbereich des Roboters angeordnet werden können, ist es üblich, dass sämtliche Plattformen die gleichen Masse aufweisen, woraus sich ergibt, dass sie alle so bemessen sein müssen, dass sie imstande sind, die grössten vorkommenden Kreissägeblätter aufzunehmen. Dabei ist bisher in Kauf genommen worden, dass die auf einer Plattform verfügbare Stapelfläche nur zu einem mehr oder weniger geringen Teil genutzt wird, wenn sie mit einem Stapel Kreissägen kleinen Durchmessers besetzt ist. Da aber Kreissägeblätter kleinen Durchmessers im allgemeinen eine geringere Bearbeitungszeit benötigen als Keisssägeblätter grösseren Durchmessers, ist ein mannloser Betrieb einer Einrichtung zum Bearbeiten von Kreissägeblättern während einer bestimmten Zeitspanne, beispielsweise einer vollen Nachtschicht, nur möglich, wenn an der Einrichtung umso mehr Plattformen mit gestapelten Kreissägeblättern bereitgehalten werden, je geringer der Durchmesser der hauptsächlich vorkommenden Kreissägeblätter ist.

Der Erfindung liegt die Aufgabe zugrunde, bei einer Einrichtung zum Bearbeiten von Kreissägeblättern, die mittels einer gegebenen Anzahl Plattformen der beschriebenen Gattung mit gestapelten Kreissägeblättern zu beschicken ist, die Voraussetzungen dafür zu verbessern, dass ein mannloser Betrieb im wesentlichen unabhängig von den hauptsächlich vorkommenden Sägeblattgrössen während einer bestimmten Zeitspanne, beispielsweise einer vollen Nachtschicht, aufrechterhalten werden kann.

Die Aufgabe ist erfindungsgemäss mit einer Einrichtung mit den Merkmalen des Anspruchs 1 gelöst. Dabei sind an jeder Plattform in Abständen von der zentralen Halterung mindestens zwei dezentrale Halterungen angeordnet , an denen sich ebenfalls je ein Dorn zum Zentrieren je eines Stapels Sägeblätter befestigen lässt. Damit wird die Möglichkeit geschaffen, auf der Plattform wahlweise einen einzigen Stapel Kreissägeblätter grossen Durchmessers oder zwei oder mehr Stapel mittleren oder kleinen Durchmessers anzuordnen.

Vorzugsweise sind sämtliche Dorne unabhängig voneinander an ihren Halterungen befestigbar und von ihnen lösbar. Dies hat zur Folge, dass die zentrale Halterung nicht mit einem Dorn besetzt zu werden braucht, wenn auf zwei oder mehr an je einer dezentralen Halterung befestigten Dornen je ein Stapel Kreissägeblätter gebildet werden soll. Diese Stapel können also den Platz über der zentralen Halterung nutzen.

Es ist ferner zweckmässig, dass sämtliche Dorne gegeneinander austauschbar sind. Dies bedeutet allerdings nicht, dass sämtliche Dorne vollständig gleich zu sein brauchen. Es ist erfindungsgemäss vorgesehen, dass sämtliche Dorne miteinander in den Bereichen übereinstimmen, in denen sie mit den Halterungen zusammenwirken. In den Bereichen, in denen die Dorne sich durch je ein zentrales Loch der gestapelten Sägeblätter erstrecken, haben die Dorne hingegen zweckmässigerweise einen Durchmesser, der mit geringem Spiel an den Lochdurchmesser der gestapelten Kreissägeblätter angepasst ist.

In jedem Fall ist es ferner vorteilhaft, wenn alle dezentralen Halterungen in gleichen Abständen von der zentralen Halterung angeordnet sind. Erfindungsgemäss sind zwei dezentrale Halterungen und die zentrale Halterung in einer Reihe nebeneinander angeordnet.

Ferner ist erfindungsgemäss vorgesehen, dass an jeder Plattform Führungsmittel zum Einschieben in eine Einrichtung zum Bearbeiten von Kreissägeblättern so ausgebildet sind, dass sie eine Einschubrichtung festlegen, die sich normal zur Reihe der Halterungen erstreckt. Bei einer solchen Anordnung braucht der Roboter nur längs der genannten Reihe verfahrbar zu sein, um Kreissägeblätter von den einzelnen Dornen zu entnehmen oder, nach der Bearbeitung, wieder auf ihnen zu stapeln.

Ausführungsbeispiele der Erfindung werden im folgenden anhand schematischer Zeichnungen mit weiteren Einzelheiten erläutert.

Es zeigen:
- Fig. 1: in Ansicht schräg von oben eine Bearbeitungseinrichtung, die mittels einer Anzahl erfindungsgemäβer Plattformen mit Kreissägeblättern beschickt wird,
- Fig. 2: die Draufsicht einer der Plattformen, die für einen Stapel Kreissägeblätter großen Durchmessers eingerichtet ist,
- Fig. 3: den Schnitt in der senkrechten Ebene III-III in Fig. 2,
- Fig. 4: die Draufsicht einer anderen der in Fig. 1 dargestellten Plattformen, die für zwei Stapel Kreissägen mittleren Durchmessers eingerichtet ist,
- Fig. 5: die Draufsicht einer weiteren der in Fig. 1 dargestellten Plattformen, die für drei Stapel Kreissägen kleinen Durchmessers eingerichtet ist, und
- Fig. 6: die Draufsicht einer nicht erfindungsgemäßen Plattform in abgewandelter Ausführungsform, die für drei Stapel Kreissägen mittleren Durchmessers eingerichtet ist.

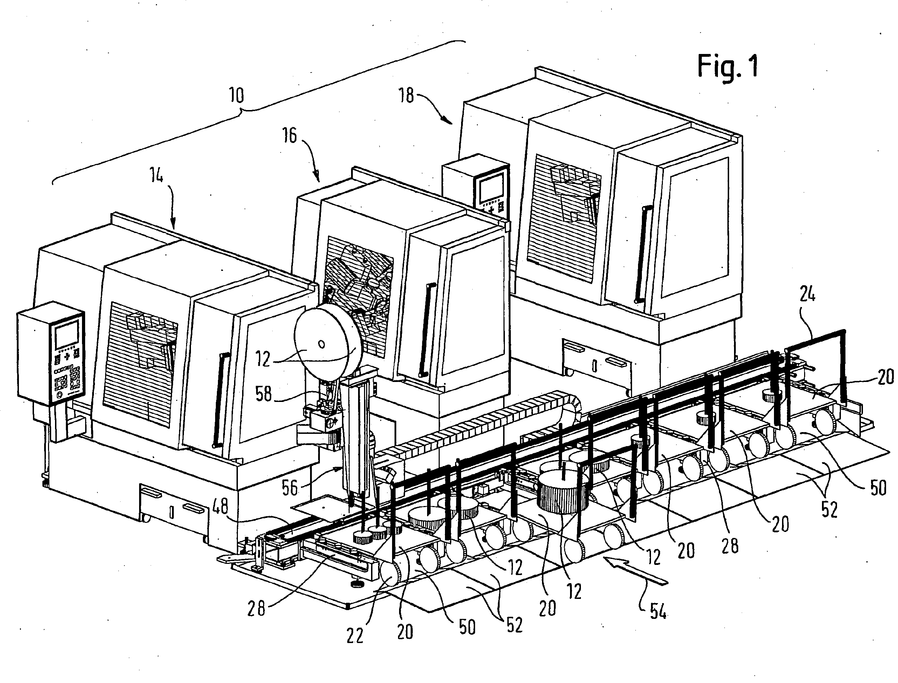

In Fig. 1 ist eine Einrichtung 10 zum Bearbeiten hartmetallbestückter Zähne von Sägeblättern 12 dargestellt. Zu der Einrichtung 10 gehören eine Maschine 14 zum Schleifen von Zahnbrustflächen, die auch als Spanflächen bezeichnet werden, eine Maschine 16 zum Schleifen von Zahnrückenflächen, die auch als Freiflächen bezeichnet werden, und eine Maschine 18 zum gleichzeitigen Schleifen von zwei Zahnseitenflächen, die auch als Zahnflanken bezeichnet werden.

Zum Bereithalten von Stapeln der zu schleifenden Kreissägeblätter 12, die sehr unterschiedliche Durchmesser haben können, dienen Plattformen 20, die im dargestellten Beispiel auf je einem eigenen Fahrgestell 22 angeordnet und mittels eines an ihnen befestigten, nach oben ragenden Bügels 24 von Hand bewegbar sind. Sämtliche der Einrichtung 10 zugeordneten Plattformen 20 sind von gleicher Größe und haben je zwei als Führungsmittel 26 ausgebildete Längsränder, an denen die Plattform geführt und zentriert wird, wenn sie in der dargestellten Weise zwischen zwei waagerechte Rollenbahnen 28 eingeschoren wird.

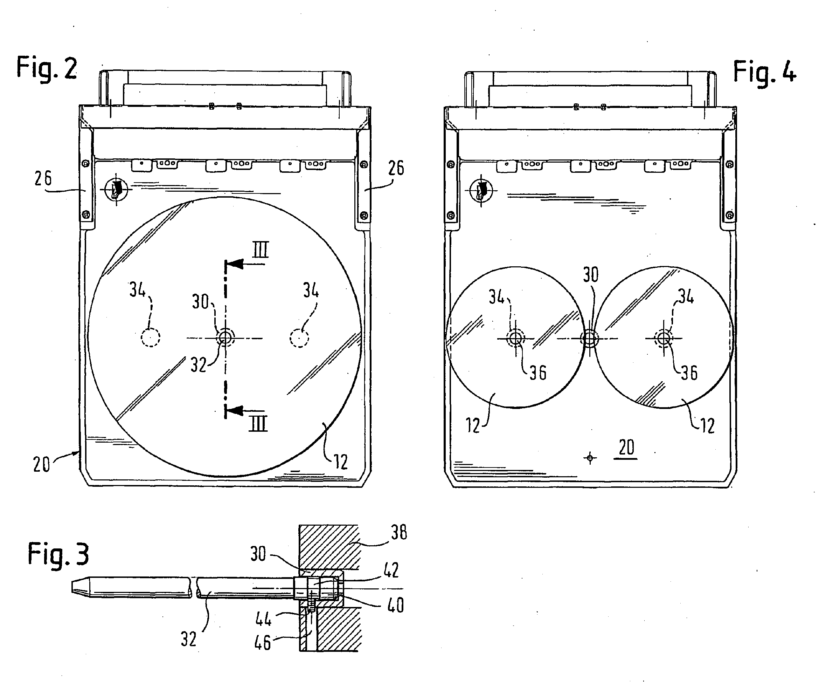

Jede der Plattformen 20 hat eine zentrale Halterung 30 für einen zentralen Dorn 32, der sich von der Plattform senkrecht nach oben erstreckt. Außerdem hat jede der Plattformen 20 mindestens zwei dezentrale Halterungen 34, die in gleichen Abständen von der zentralen Halterung 30 angeordnet und dazu bestimmt sind, bei Bedarf je einen dezentralen Dorn 36 aufzunehmen. Bei der in Fig. 2 dargestellten Anordnung ist nur die zentrale Halterung 30 mit einem Dorn 32 besetzt; die beiden in Fig. 2 mit gestrichelten Linien angedeuteten dezentralen Halterungen 34 sind unbesetzt, so dass der Raum über ihnen für einen Stapel Kreissägeblätter 12 des größten von der Einrichtung 10 bearbeitbaren Durchmessers frei ist.

Bei der Anordnung gemäß Fig. 4 ist hingegen die zentrale Halterung 30 nicht mit einem Dorn besetzt, während die beiden wie in Fig. 2 angeordneten dezentralen Halterungen 34 je einen dezentralen Dorn 36 tragen. Diese beiden dezentralen Dorne 36 zentrieren je einen Stapel Kreissägeblätter 12 mittleren Durchmessers.

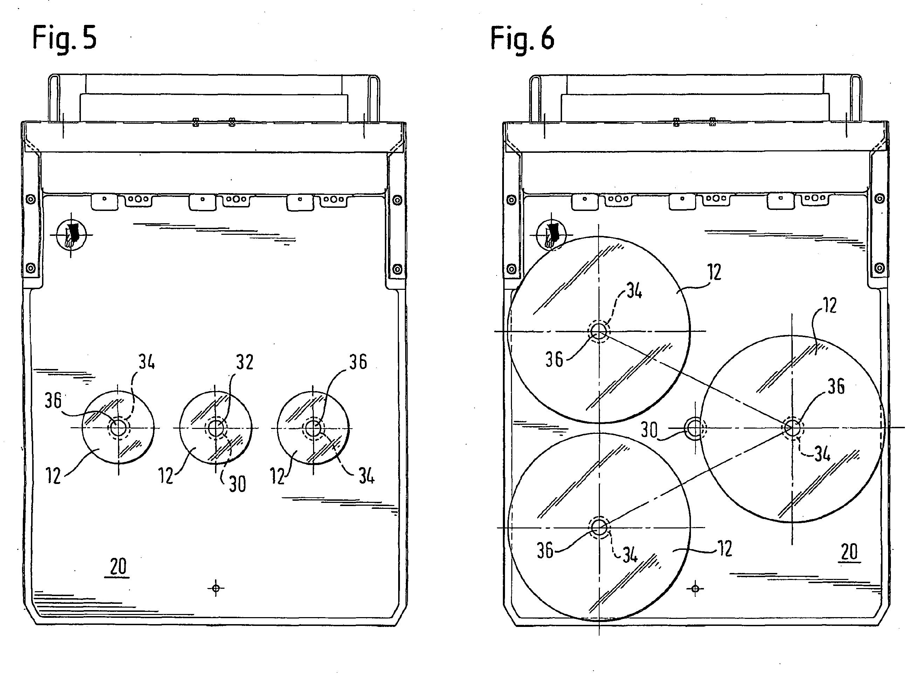

Im Gegensatz dazu sind bei der Anordnung gemäß Fig. 5 sämtliche Halterungen 30 und 34 mit je einem Dorn besetzt; die zentrale Halterung 30 trägt also den zentralen Dorn 32, während die beiden dezentralen Halterungen 34 je einen dezentralen Dorn 36 tragen. Diese insgesamt drei Dorne 32 und 36 tragen je einen Stapel Kreissägeblätter 12 kleinen Durchmessers.

In den dargestellten Beispielen sind die dezentralen Halterungen 34 der zentralen Halterung 30 vollständig gleich, weshalb es genügt, dass in Fig. 3 nur die zentrale Halterung 30 in einem senkrechten Schnitt dargestellt ist. Die Halterungen 30 und 34 sind von je einer Büchse aus gehärtetem Stahl mit geschliffener innerer und äußerer zylindrischer Mantelfläche gebildet und in je einem rohrförmigen Sockel 38 der zugehörigen Plattform 20 befestigt, beispielsweise eingepresst. Die Dorne 32 und 36 bestehen ebenfalls aus gehärtetem Stahl und haben je einen im wesentlichen zylindrischen Fuß 40, der mit Schiebepassung, also im wesentlichen spielfrei, in jede der Halterungen 30 und 34 passt und eine Ringnut 42 aufweist. In jede der Halterungen 30 und 34 ist radial eine Klemmschraube 44 eingeschraubt, die in festgezogenem Zustand derart in die Ringnut 42 des zugehörigen Dorns 32 bzw. 36 eingreift, dass dieser gegen unbeabsichtigtes Herausziehen gesichert ist. Jeder der rohrförmigen Sockel 38 weist eine radiale Bohrung 46 auf, durch die hindurch die zugehörige Klemmschraube 44 mit einem Schlüssel, beispielsweise Innensechskantschlüssel, zugänglich ist.

Die drei Maschinen 14, 16 und 18 sind in einer Reihe parallel zu und auf einer Seite einer Längsschiene 48 angeordnet, an deren entgegengesetzter Seite mehrere, im dargestellten Beispiel sieben, Standplätze 50 für je einer der Plattformen 20 zwischen je zweien der Rollenbahnen 28 vorgesehen sind. Vor jedem Standplatz 50 ist eine Rampe 52 angeordnet, die das Aufschieben einer der mit Fahrgestell 22 versehenen Plattformen 20 auf den betreffenden Standplatz in der mit einem Pfeil angedeuteten Einschubrichtung 54 erleichtert.

Entlang der Längsschiene 48 ist ein Roboter 56 verfahrbar, der eine doppelte Greiferanordnung 58 trägt und mit dieser im Stande ist, aus jeder beliebigen der Maschinen 14, 16 und 18 ein bearbeitetes Kreissägeblatt 12 zu entnehmen, dann um 180° zu schwenken, ein zu bearbeitendes Sägeblatt in dieselbe Maschine einzusetzen und schließlich das bearbeitete Sägeblatt an eine andere der Maschinen abzugeben oder es auf einer der Plattformen 20 abzulegen, je nachdem ob eine weitere Bearbeitung dieses Sägeblattes erforderlich ist oder nicht. Die Greiferanordnung 58 kann beispielsweise entsprechend DE-A-100 05 378 gestaltet sein.

Die in Fig. 6 dargestellte nicht erfindungsgemäße Plattform 20 unterscheidet sich von den in Fig. 1, 2, 4 und 5 dargestellten Plattformen dadurch, dass rings um die zentrale Halterung 30 in gleichen Abständen voneinander drei dezentrale Halterungen 34 angeordnet sind. Deshalb ist es möglich, auf dieser Plattform wahlweise bis zu drei Stapel Kreissägeblätter 12 mittleren Durchmessers anstelle eines einzigen Stapels Kreissägeblätter gro-βen Durchmessers unterzubringen.

## Patentansprüche

1. Einrichtung (10) zum Bearbeiten hartmetallbestückter Zähne von Sägeblättern, mit mehreren einzelnen Maschinen (14, 16, 18) zum Schleifen von Zahnbrustflächen, Zahnrückenflächen und Zahnflankenflächen, die durch einen Roboter miteinander verkettet sind, um Kreissägeblätter unterschiedlichen Durchmessers und mit unterschiedlichen Verzahnungen vollautomatisch zu bearbeiten, wobei die Einrichtung Plattformen zum Stapeln und Bereitstellen von Kreissägeblättern (12) umfasst, wobei an jeder Plattform wenigstens ein an der Plattform (20) auswechselbar anbringbarer Dorn (32, 36) vorgesehen ist, der dazu ausgebildet ist, sich durch je ein zentrales Loch der gestapelten Kreissägeblätter (12) zu erstrecken,
wobei an jeder Plattform (20) zentral eine Halterung (30) zum Aufnehmen und Befestigen eines Dorns (32) zum Zentrieren eines auf den Dorn (32) aufgesteckten Stapels Kreissägeblätter (12) in aufrechter Stellung angeordnet ist und wobei an jeder Plattform (20) in Abständen von der zentralen Halterung (30) mindestens zwei dezentrale Halterungen (34) angeordnet sind, die zusammen mit der zentralen Halterung (30) in einer Reihe zueinander angeordnet sind, wobei die mindestens zwei dezentralen Halterungen (34) zum Aufnehmen und Befestigen je eines Dorns (36) zum Zentrieren je eines auf den Dorn (36) aufgesteckten Stapels Kreissägeblätter (12) ausgebildet sind, wobei die Halterungen (30, 34) zum Aufnehmen und Befestigen unterschiedlicher Dorne (32, 36) ausgebildet sind, wobei sämtliche Dorne (32, 36) zumindest in den Bereichen übereinstimmen, in denen sie mit den Halterungen (30, 34) zusammenwirken,
und wobei jede Plattform (20) auf einem eigenen Fahrgestell (22) angeordnet ist und Führungsmittel (26) in der Form zweier Längsränder zum Einschieben in die Einrichtung (10) zum Bearbeiten der Kreissägeblätter (12) aufweist, die so ausgebildet sind, dass sie eine Einschubrichtung (54) zwischen zwei waagrechten Rollenbahnen (28) der Einrichtung zum Führen der Plattformen festlegen, wobei die Einschubrichtung sich normal zu der Reihe der Halterungen (30, 34) erstreckt.

2. Einrichtung nach Anspruch 1, **dadurch gekennzeichnet, dass** sämtliche Dorne (32, 36) unabhängig voneinander an ihren Halterungen (30, 34) befestigbar und von ihnen lösbar sind.

3. Einrichtung nach Anspruch 2, **dadurch gekennzeichnet, dass** sämtliche Dorne (32, 36) gegeneinander austauschbar sind.

4. Einrichtung nach einem der Ansprüche 1 bis 3, **dadurch gekennzeichnet, dass** alle dezentralen Halterungen (34) in gleichen Abständen von der zentralen Halterung (30) angeordnet sind.

## Claims

1. Apparatus (10) for machining carbid-tip teeth on saw blades, including a plurality of separate machines (14, 16, 18) for grinding breast faces of the teeth, back faces of the teeth and the tooth flanks, which machines (14, 16, 18) are chained together by a robot, to machine the saw blades with differing diameters and with differing toothing fully automated, wherein the apparatus comprises platforms for stacking and providing of saw blades (12), wherein at each platform at least one mandrel (32, 36) is provided exchangeably at the platform (20), which (32, 36) mandrel is adapted to extend through a central hole the saw blades (12) arranged in a stack,
wherein at each platform (20) a central holding device (30) is arranged for receiving and attaching of a mandrel (32) in upright position, which mandrel (32) is provided for centering of the saw blades (12) arranged in a stack, and wherein at each platform (20) spaced from the central holding device (30) at least two decentralized holding devices (34) are arranged, which are together with the central holding device (30) arranged in a row, wherein the at least two decentralized holding devices (34) are adapted to receive and attach at least one mandrel (36), which mandrel (36) is adapted to center one of the saw blades (12) arranged in a stack, wherein the holding devices (30, 34) are adapted to receive and attach differing mandrels (32, 36), wherein all mandrels (32, 36) coincide with each other at least in areas, in which they are interact with the holding devices (30, 34),
and wherein each platform (20) is arranged at a undercarriage (22) and comprises guide means (26) in form of two longitudinal rims for inserting in the apparatus (10) for machining the saw blades (12), which are arranged such that they define a direction of insertion (54) between two horizontal roller trains (28) of the means for guiding the platforms, wherein the direction of insertion extends as a normal to the row of holding devices (30, 34).

2. Apparatus according to claim 1, **characterized in that** all mandrels (32, 36) are attachabe in their holding devices (30, 34) independently from each other and are removable from the inside.

3. Apparatus according to claim 2, **characterized in that** all of the mandrels (32, 36) are exchangeable with each other.

4. Apparatus according to one of the claims 1 to 3, **characterized in that** each decentralized holding device (34) is arranged in equal distances to the centralized holding device (30).

## Revendications

1. Dispositif (10) de traitement des dents à plaquettes en métal dur de lames de scie au moyen de plusieurs machines indépendantes (14, 16, 18) destinées à l'affûtage des faces d'attaque, faces en dépouille et faces latérales des dents et reliées les unes aux autres par un robot pour traiter de manière entièrement automatique des lames de scie circulaires de diamètre variable et pourvues de dentures différentes, le dispositif comportant des plates-formes d'empilage et de mise à disposition de lames de scie circulaires (12), au moins une broche (32, 36), qui peut être montée et remplacée sur la plate-forme (20) et est conçue pour s'étendre à chaque fois à travers un trou central des lames de scie circulaires empilées (12), étant prévue sur chaque plate-forme,
un dispositif de fixation (30) étant disposé en position debout et de manière centrale sur chaque plate-forme (20) pour accueillir et fixer une broche (32) destinée au centrage d'une pile de lames de scie circulaires enfilées sur la broche (32), et au moins deux dispositifs de fixation (34) décentralisés étant disposés sur chaque plate-forme (20) à distance du dispositif de fixation central (30), lesquels sont disposés de manière à former une ligne avec le dispositif de fixation central (30), lesdits deux dispositifs de fixation décentralisés (34) étant conçus pour accueillir et fixer chacun une broche (36) destinée au centrage d'une pile de lames de scie circulaires (12) respectivement enfilées sur la broche (36), les dispositifs de fixation (30, 34) étant conçus pour accueillir et fixer des broches différentes (32, 36), toutes les broches (32, 36) étant identiques dans les zones où elles coopèrent avec les dispositifs de fixation (30, 34),
et chaque plate-forme (20) étant disposée sur un châssis (22) distinct et présentant des moyens de guidage (26) réalisés sous la forme de deux bords longitudinaux pour insertion dans le dispositif (10) en vue du traitement des lames de scie circulaires (12), lesquels bords sont conçus de manière à déterminer une direction d'insertion (54) entre deux voies à galets horizontales (28) du dispositif pour le guidage des plates-formes, la direction d'insertion s'étendant perpendiculairement par rapport à la ligne formée par les dispositifs de fixation (30, 34).

2. Dispositif selon la revendication 1, **caractérisé en ce que** toutes les broches (32, 36) peuvent, indépendamment les unes des autres, être fixées de manière amovible à leurs dispositifs de fixation (30, 34).

3. Dispositif selon la revendication 2, **caractérisé en ce que** toutes les broches (32, 36) sont interchangeables entre elles.

4. Dispositif selon l'une des revendications 1 à 3, **caractérisé en ce que** tous les dispositifs de fixation (34) décentralisés sont disposés à distances égales du dispositif de fixation central (30).
